# EUROPEAN PATENT SPECIFICATION

(11) **EP 3 418 329 B1**
(45) Date of publication and mention of the grant of the patent: **17.08.2022**
(21) Application number: 17753143.1
(22) Date of filing: 14.02.2017
(51) Int. Cl.: B29C 55/00, C08L 23/00, B29C 55/04, B65D 85/86, C08K 3/00, C08K 5/56, C08L 69/00

(54) **POLYOLEFIN-BASED RESIN COMPOSITION AND POLYOLEFIN-BASED RESIN FILM**
HARZZUSAMMENSETZUNG AUF POLYOLEFIN-BASIS UND HARZFILM AUF POLYOLEFIN-BASIS
COMPOSITION DE RÉSINE À BASE DE POLYOLÉFINE ET FILM DE RÉSINE À BASE DE POLYOLÉFINE

(30) Priority: 16.02.2016 JP 2016027120
(43) Date of publication of application: 26.12.2018
(73) Proprietor: Sumitomo Seika Chemicals Co., Ltd., Kako-gun, Hyogo 675-0145 (JP); National University Corporation Kanazawa University, Kanazawa-shi, Ishikawa 920-1192 (JP)
(72) Inventor: NISHIOKA, Kiyoshi, Himeji-shi Hyogo 672-8076 (JP); SUZUKI, Masahiro, Himeji-shi Hyogo 672-8076 (JP); NITTA, Koh-hei, Kanazawa-shi Ishikawa 920-1192 (JP); MAE, Miho, Kanazawa-shi Ishikawa 920-1192 (JP)
(74) Representative: Vossius & Partner Patentanwälte Rechtsanwälte mbB
(86) International application number: PCT/JP2017/005227
(87) International publication number: WO 2017/141886

(56) References cited:
- EP-A1- 2 473 542
- WO-A1-2013/007760
- WO-A1-2013/007760
- WO-A1-2016/031626
- CN-B- 101 443 404
- JP-A- 2010 138 326
- JP-A- 2013 503 921
- JP-A- 2014 058 610
- US-A1- 2013 209 775
- US-A1- 2014 005 624
- Joseph R Webster: "The Perception of Metallic Stearates as Acid Acceptors", , 3 October 2006 (2006-10-03), XP055683818, Retrieved from the Internet: URL:http://www.stabilization-technologies. com/attachments/File/The_Perception_Of_Met allic_Stearates_As_Acid_Acceptors_Revised. pdf [retrieved on 2020-04-07]

## Description

### Technical Field

The present invention relates to a polyolefin-based resin composition, and a polyolefin-based resin film obtained by using the polyolefin-based resin composition.

### Background Art

Polyolefin-based resins are inexpensive, have a good balance of physical properties, and are used for various purposes. In particular, polyolefin-based resin films, which have excellent specific strength and chemical stability, have been widely used as packaging materials. However, polyolefin-based resins have very high surface-specific resistance values, and are easily electrically charged by friction etc. Therefore, after being formed into a film or the like, polyolefin-based resins have a problem of adherence of dust etc. In particular, when a polyolefin-based resin is used as a package for precision instruments, such as electronic components, dust adherence must be avoided. Accordingly, various conductive substances are incorporated to lower the high surface-specific resistance value of a polyolefin-based resin, and impart an antistatic function. For example, Patent Literature (PTL) 1 discloses that a polyolefin-based resin composition with excellent antistatic performance is produced by incorporating surface-modified carbon nanotubes with a polypropylene resin. PTL 2 discloses that a polyolefin-based resin composition with excellent antistatic performance is produced by incorporating a polystyrene-based resin and an ionomer resin into polyolefin.

WO2013/007760 A1 discloses blends of poly(alkylene)carbonate with polyolefins for oxygen barrier.

EP2473542 A0 discloses biodegradable polymer/thermoplastic starch compositions.

CN101443404 B discloses antistatic resin compositions.

### Citation List

### Patent Literature

PTL 1: JP2009-249241A
PTL 2: JP2011-162761A

### Summary of Invention

### Technical Problem

Polyolefin-based resins, which are nonpolar resins, are very poorly miscible with polar conductive substances. To impart antistatic properties to polyolefin-based resins, it is necessary to incorporate a large amount of a conductive substance into the polyolefin-based resins. This may reduce the mechanical strength of the polyolefin-based resins, or cause coloring derived from the conductive substance.

Prior to the present invention, the present inventors found that when a resin composition prepared by incorporating a polyalkylene carbonate resin and an ionic liquid into a polyolefin-based resin is stretched at least uniaxially, the surface resistance value is significantly reduced as compared with that of the original polyolefin-based resin. However, the ionic liquid, which is a highly viscous liquid, requires a device for injecting the highly viscous liquid when kneaded, and is difficult to quantify due to its high viscosity. Therefore, there is a need to implement better workability.

The present invention has been made in view of the above problem. An object of the present invention is to provide a polyolefin-based resin composition with excellent antistatic performance and excellent workability during the production, which is achieved by adding a conductive substance to a polyolefin-based resin. Another object of the present invention is to provide a polyolefin-based resin film formed using the composition.

### Solution to Problem

As a result of extensive research, the present inventors found that when a resin composition comprising a polyolefin-based resin, a polyalkylene carbonate resin, and a metal salt having a melting point higher than 100°C is stretched at least uniaxially, the surface resistance value is significantly lowered as compared with that of the original polyolefin-based resin. The present inventors conducted further studies based on this finding, and have accomplished the present invention.

The present invention is stated in the claims.

### Advantageous Effects of Invention

The polyolefin-based resin composition according to the present invention is such that the mechanical properties of the polyolefin-based resin used to obtain the composition are maintained and a film formed by stretching the polyolefin-based resin composition at least uniaxially has a significantly reduced surface resistivity, and thus has enhanced antistatic performance. Therefore, problems at the time of use, such as dust adherence, can also be reduced.

### Brief Description of Drawings

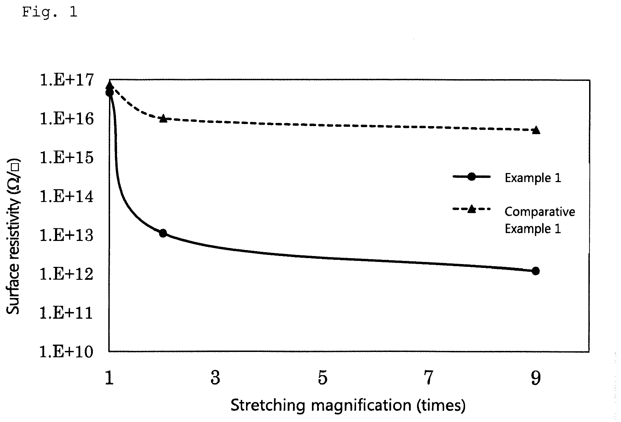

Fig. 1 is a graph showing the relationship between the stretching magnification and the surface resistivity of the films obtained in Example 1 and Comparative Example 1.

### Description of Embodiments

Embodiments of the present invention are described below in detail.

### Polyolefin-Based Resin Composition

The polyolefin-based resin composition contains a polyolefin-based resin, a polyalkylene carbonate resin, and a metal salt having a melting point higher than 100°C.

The polyolefin-based resin refers to a polymer comprising olefin-derived monomer units. Examples include polyethylene-based resins, polypropylene-based resins, ethylene-carboxylic acid alkenyl ester copolymer resins, ethylene-unsaturated carboxylic acid alkyl ester copolymer resins, polybutene-based resins, poly(4-methyl-1-pentene)-based resins, and the like.

Examples of preferable polyethylene-based resins include polyethylene. The polyethylene is not particularly limited. Examples of usable polyethylene include low-density polyethylene, linear low-density polyethylene, medium-density polyethylene, high-density polyethylene, ultrahigh-molecular-weight polyethylene, and the like.

Examples of preferable polypropylene-based resins include polypropylene, and copolymers of propylene with one or more other olefins. Examples of preferable "one or more other olefins" as used herein include ethylene, butene, pentene, hexene, octane, and the like. The "one or more other olefins" for use may refer to a single olefin, or a combination of two or more olefins. The copolymer may be a block copolymer, a random copolymer, or an alternating copolymer. More specifically, as a polypropylene-based resin, polypropylene, a propylene-ethylene copolymer, a propylene-ethylene-butene copolymer, a propylene-butene copolymer, a propylene-hexene copolymer, a propylene-octene copolymer, and the like are preferable. Polypropylene is more preferable. Polypropylene is not particularly limited. For example, isotactic polypropylene, syndiotactic polypropylene, and the like can be used.

Examples of "carboxylic acid alkenyl esters" of ethylene-carboxylic acid alkenyl ester copolymer resins include vinyl acetate, vinyl propionate, vinyl butyrate, isopropenyl acetate, allyl acetate, and the like. Of these, vinyl acetate is preferable. Specifically, as an ethylene-carboxylic acid alkenyl ester copolymer resin, an ethylene-vinyl acetate copolymer is particularly preferable.

Examples of "unsaturated carboxylic acid alkyl esters" of ethylene-unsaturated carboxylic acid alkyl ester copolymer resins include methyl acrylate, ethyl acrylate, propyl acrylate, methyl methacrylate, ethyl methacrylate, propyl methacrylate, and the like. Of these, methyl acrylate and methyl methacrylate are preferable. Specifically, as an ethylene-unsaturated carboxylic acid alkyl ester copolymer resin, an ethylene-methyl acrylate copolymer and an ethylene-methyl methacrylate copolymer are particularly preferable.

Polyolefin-based resins can be used singly, or in a combination of two or more. Of polyolefin-based resins, polyethylene-based resins or polypropylene-based resins are preferably used from the viewpoint of excellent compatibility with polyalkylene carbonate resins. At least one resin selected from the group consisting of polyethylene, polypropylene, and copolymers of propylene with one or more other olefins is more preferable. Polyethylene and polypropylene are particularly preferable.

The method for producing a polyolefin-based resin is not particularly limited. Any known methods may be used. Examples of usable methods include methods comprising radical polymerization of an olefin using an initiator, such as a peroxide; methods comprising polymerization of an olefin using the gas-phase method, the solution method, etc. in the presence of a polymerization catalyst; and the like. Examples of usable polymerization catalysts include Ziegler-Natta catalysts, Phillips catalysts, metallocene catalysts, and the like.

The molecular weight of the polyolefin-based resin is not particularly limited. For example, the mass average molecular weight of the polyolefin-based resin is such that the lower limit is preferably 20,000, and the upper limit is preferably 6,000,000; the lower limit is more preferably 50,000, and the upper limit is more preferably 3,000,000; the lower limit is even more preferably 100,000, and the upper limit is even more preferably 1,000,000. The polyolefin-based resin having a mass average molecular weight of 20,000 or more can more preferably enhance the mechanical strength of the resulting polyolefin-based resin composition, and thus ensures practical use. The polyolefin-based resin having a mass average molecular weight of 6,000,000 or less makes the process of forming the resulting polyolefin-based resin composition easier.

The mass average molecular weight is a value calculated by preparing a 0.5% solution of a polyolefin-based resin in 1,2-dichlorobenzene, conducting a measurement by high-performance liquid chromatography, and comparing the measurement result with that of polystyrene with known mass average molecular weight measured under the same conditions. The measurement conditions are as follows.

Column: GPC Column (trade name of Tosoh Corporation: TSKgel GMH_{HR}-H HT)
Column temperature: 140°C
Eluent: 1,2-dichlorobenzene
Flow Rate: 1 mL/min

The resin fluidity may be shown, for example, in terms of the melt flow rate (MFR, unit: g/10 minutes) measured by the method described in JIS K 7210: 1999. In the above polyolefin-based resin, the lower limit of MFR measured at a temperature of 230°C with a load of 2.16 kg by the above method is preferably 0.5, and the upper limit is preferably 100. The lower limit of MFR is more preferably 1, and the upper limit of MFR is more preferably 50 (g/10 minutes). When the polyolefin-based resin has an MFR of 0.5 or more, the obtained polyolefin-based resin composition has a fluidity that is not excessively low, and can be preferably formed into a shape by an extrusion or blowing forming process. When the polyolefin-based resin has an MFR of 100 or less, the obtained polyolefin-based resin composition can be preferably formed into a shape by an injection forming process or the like.

The amount of the polyolefin-based resin contained in the polyolefin-based resin composition is not particularly limited, and can be suitably selected as long as the effect of the present invention is not impaired. The amount of the polyolefin-based resin may be, for example, 50 mass% or more, 60 mass% or more, 70 mass% or more, 80 mass% or more, 90 mass% or more, 95 mass% or more, 99 mass% or more, or 99.9 mass% or more.

The polyalkylene carbonate resin is not particularly limited. Examples include a polymer obtained by polymerization reaction of alkylene oxide and carbon dioxide (i.e., a copolymer of alkylene oxide and carbon dioxide), and a polymer obtained by ring-opening polymerization of cyclic carbonate. Of these, a polyalkylene carbonate resin obtained by copolymerization of alkylene oxide and carbon dioxide is preferably used. The polymerization reaction of alkylene oxide and carbon dioxide can be preferably performed in the presence of a metal catalyst.

Examples of alkylene oxides include ethylene oxide, propylene oxide, 1-butene oxide, 2-butene oxide, isobutylene oxide, 1-pentene oxide, 2-pentene oxide, 1-hexene oxide, 1-octene oxide, 1-decene oxide, cyclopentene oxide, cyclohexene oxide, styrene oxide, vinylcyclohexene oxide, 3-phenylpropylene oxide, 3,3,3-trifluoropropylene oxide, 3-naphthylpropylene oxide, 3-phenoxy propylene oxide, 3-naphthoxy propylene oxide, butadiene monoxide, 3-vinyloxy propylene oxide, 3-trimethylsilyloxy propylene oxide, and the like. Of these alkylene oxides, from the viewpoint of high polymerization reactivity with carbon dioxide, ethylene oxide and propylene oxide are preferable, and propylene oxide is more preferable. Such alkylene oxides may be used singly, or in a combination of two or more.

Examples of metal catalysts include aluminum catalysts and zinc catalysts. Of these, from the viewpoint of high polymerization activity in a polymerization reaction of alkylene oxide and carbon dioxide, zinc catalysts are preferably used.

Examples of zinc catalysts include organozinc catalysts such as zinc acetate, diethylzinc, and dibutylzinc; organozinc catalysts obtained by reacting a zinc compound with a compound such as a primary amine, a divalent phenol, a divalent aromatic carboxylic acid, an aromatic hydroxylic acid, an aliphatic dicarboxylic acid, or an aliphatic monocarboxylic acid; and the like. Of these organozinc catalysts, those obtained by reacting a zinc compound with an aliphatic dicarboxylic acid and an aliphatic monocarboxylic acid are preferable because of their higher polymerization activity. Specific examples of preferable organozinc catalysts include dimethyl zinc, diethyl zinc, and diphenyl zinc.

The amount of the metal catalyst to be used for the polymerization reaction is such that the lower limit is preferably 0.001 parts by mass, and the upper limit is preferably 20 parts by mass; and the lower limit is more preferably 0.01 parts by mass, and the upper limit is more preferably 10 parts by mass, per 100 parts by mass of alkylene oxide. When the amount of the metal catalyst is 0.001 parts by mass or more, the polymerization reaction can proceed quickly. When the amount of the metal catalyst is 20 parts by mass or less, effects that are commensurate with the amount of catalyst used can be obtained.

The method for the polymerization reaction of alkylene oxide and carbon dioxide in the presence of a metal catalyst is not particularly limited. For example, the following method can be used: after alkylene oxide, a metal catalyst, and optionally a reaction solvent are placed in an autoclave and mixed, carbon dioxide is compressed thereinto to allow a reaction to proceed.

The reaction solvent optionally used in the polymerization reaction is not particularly limited. A variety of organic solvents can be used. Specific examples include aliphatic hydrocarbon-based solvents, such as pentane, hexane, octane, decane, and cyclohexane; aromatic hydrocarbon-based solvents, such as benzene, toluene, and xylene; halogenated hydrocarbon-based solvents, such as dichloromethane, chloroform, carbon tetrachloride, 1,1-dichloroethane, 1,2-dichloroethane, ethyl chloride, trichloroethane, 1-chloropropane, 2-chloropropane, 1-chlorobutane, 2-chlorobutane, 1-chloro-2-methylpropane, chlorobenzene, and bromobenzene; ether-based solvents such as tetrahydrofuran, 1,3-dioxolan, 1,4-dioxane, and 1,2-dimethoxyethane; ester-based solvents such as ethyl acetate and butyl acetate; ketone-based solvents such as acetone, methylethylketone, and methylisobutylketone; and carbonate-based solvents, such as dimethyl carbonate, diethyl carbonate, and propylene carbonate.

The amount of the reaction solvent is preferably 100 to 10,000 parts by mass per 100 parts by mass of alkylene oxide, from the viewpoint of achieving a smooth reaction.

The pressure of carbon dioxide used in the polymerization reaction is not particularly limited. Generally, the lower limit is preferably 0.1 MPa, and the upper limit is preferably 20 MPa; the lower limit is more preferably 0.2 MPa, and the upper limit is more preferably 10 MPa; and the lower limit is even more preferably 0.5 MPa, and the upper limit is even more preferably 5 MPa.

The polymerization reaction temperature in the polymerization reaction is not particularly limited. However, the polymerization reaction temperature is preferably such that the lower limit is preferably 30°C, and the upper limit is preferably 100°C; and the lower limit is more preferably 40°C, and the upper limit is more preferably 80°C. A polymerization reaction temperature of 30°C or more allows the polymerization reaction to proceed more quickly. A polymerization reaction temperature of 100°C or less can decrease the likelihood of side reactions, and further increase the yield of the polymer. The polymerization reaction time cannot be generalized, because it depends on the polymerization reaction temperature, the amount of catalyst, and type of alkylene oxide; however, it is usually preferable that polymerization reaction time is 2 to 40 hours.

After completion of the polymerization reaction, the reaction product is separated by filtration or the like, optionally washed with a solvent or the like, and dried to obtain a polyalkylene carbonate resin.

The polyalkylene carbonate resin used to form the polyolefin-based resin composition may be a single polyalkylene carbonate resin, or a combination of two or more.

The mass average molecular weight of the polyalkylene carbonate resin is such that the lower limit is preferably 10,000, and the upper limit is preferably 2,000,000; the lower limit is more preferably 30,000, and the upper limit is more preferably 1,000,000; the lower limit is even more preferably 50,000, and the upper limit is even more preferably 750,000. The mass average molecular weight is a value calculated by preparing a 0.5% solution of a polyalkylene carbonate resin in N,N-dimethylformamide, conducting a measurement by high-performance liquid chromatography, and comparing the measurement result with that of polystyrene with known mass average molecular weight measured under the same conditions. The measurement conditions are as follows.

Column: GPC column (trade name: Shodex OHpak SB-800 series, produced by Showa Denko K.K.)
Column Temperature: 40°C
Eluent: 0.03 mol/L lithium bromide-N,N-dimethylformamide solution
Flow Rate: 0.65 mL/min

When the polyalkylene carbonate resin has a mass average molecular weight of 10,000 or more, the obtained polyolefin-based resin composition can have preferably enhanced mechanical strength. When the polyalkylene carbonate resin has a mass average molecular weight of 2,000,000 or less, enhanced dispersibility in the polyolefin-based resin can be achieved.

The polyalkylene carbonate resin content of the polyolefin-based resin composition is such that the lower limit is preferably 0.05 parts by mass and the upper limit is preferably 20 parts by mass; the lower limit is more preferably 0.5 parts by mass and the upper limit is more preferably 17.5 parts by mass; the lower limit is even more preferably 1 part by mass, and the upper limit is even more preferably 15 parts by mass, per 100 parts by mass of the polyolefin-based resin. When the polyalkylene carbonate resin content is more than 20 parts by mass, the mechanical strength and/or the breaking strain of the polyolefin-based resin composition may slightly decrease. When the polyalkylene carbonate resin content is less than 0.05 parts by mass, high modification effects of the polyolefin-based resin composition may not be obtained.

The metal salt having a melting point higher than 100°C is formed from a metal cation and an anion.

The cation of the metal salt is lithium ion, sodium ion, or potassium ion; and more preferably, for example, lithium ion.

Examples of the anion of the metal salt include halogen ion,

carboxylate ion, and the like. Specific examples of preferable anions include chloride, bromide, iodide, tetrafluoroborate, halophosphate,
bis(perfluoroalkyl sulfonyl)amide, and the like.

The metal salt of the polyolefin-based resin composition is an alkali metal salt as stated in claim 1.

The combination of the cation and anion of the metal salt is
a combination of a cation selected from the group consisting of lithium ion, sodium ion, and potassium ion, and an anion selected from the group consisting of halogen, carboxylate, hexafluorophosphate, tetrafluoroborate, and bis(perfluoroalkyl sulfonyl)amide.

Among bis(perfluoroalkyl sulfonyl)amides, bis(trifluoromethanesulfonyl)amide is particularly preferable.

Among the above combinations, a combination of lithium ion, sodium ion, or potassium ion as a cation, and bis(trifluoromethane sulfonyl)amide or halogen ion (in particular, fluoride ion, chloride ion, bromide ion, or iodide ion) as an anion is particularly preferable. Specific examples of the metal salt include lithium bis(trifluoromethane sulfonyl)amide, lithium bromide, potassium iodide, and the like.

The metal salt content of the polyolefin-based resin composition is such that the lower limit is preferably 0.01 parts by mass, and the upper limit is preferably 10 parts by mass; the lower limit is more preferably 0.1 parts by mass, and the upper limit is more preferably 7.5 parts by mass; and the lower limit is even more preferably 0.5 parts by mass, and the upper limit is even more preferably 5 parts by mass, per 100 parts by mass of polyolefin-based resin. When the metal salt content is within the above range, the antistatic performance can be enhanced without greatly decreasing other properties of the polyolefin-based resin composition.

The method for producing the polyolefin-based resin composition is not particularly limited. Examples include a method comprising mixing, in no particular order, a polyolefin-based resin, a polyalkylene carbonate resin, and a metal salt using a Henschel mixer, a ribbon blender, a blender, or the like, and melt-kneading the resulting mixture; a method comprising melt-kneading a polyalkylene carbonate resin and a metal salt beforehand, then mixing the resulting mixture with a polyolefin-based resin, and melt-kneading; and a method comprising dissolving and mixing a polyolefin-based resin, a polyalkylene carbonate resin, and a metal salt in a solvent or the like, and then removing the solvent. Of these production methods, the method comprising melt-kneading a polyolefin-based resin, a polyalkylene carbonate resin, and a metal salt is preferable from the viewpoint of simplicity of producing the composition as well as capability of producing a homogeneous composition. For example, a method comprising preparing a mixture by dissolving a polyalkylene carbonate resin and a metal salt in a solvent, then removing the solvent therefrom, further adding a polyolefin-based resin to the mixture, and melt-kneading is preferably used. The solvent used herein can be appropriately selected from suitable organic solvents, and is preferably, for example, acetone.

The method for melt-kneading a polyolefin-based resin, a polyalkylene carbonate resin, and a metal salt is not particularly limited. Examples include melt-kneading methods using a uniaxial extruder, a biaxial extruder, a Banbury mixer, a kneader, a roll kneader, or the like.

The shape of the polyolefin-based resin composition is not restricted. The polyolefin-based resin composition can be formed into any shape, such as a strand, a sheet, a flat plate, or a pellet. In particular, a pellet is preferable in terms of ease of supplying to a forming machine. The polyolefin-based resin composition is preferably a solid composition.

The polyolefin-based resin composition may comprise other additives as long as the effect of the present invention is not impaired. Examples of such additives include antioxidants; stabilizers such as ultraviolet absorbers and light stabilizers; flame retardants; antistatic agents; antimicrobial agents; nucleating agents; lubricants; anti-blocking agents; colorants; fillers; and the like.

Examples of antioxidants include 2,6-di-t-butyl-p-cresol (BHT), 2,2'-methylenebis(4-methyl-6-t-butylphenol), tetrakis[methylene-(3,5-di-t-butyl-4-hydroxyhydrocinnamate)]methane, dilauryl-3,3'-thiodipropionate (DLTDP), distearyl-3,3'-thiodipropionate (DSTDP), triphenyl phosphite (TPP), triisodecyl phosphite (TDP), octylated diphenylamine, N-n-butyl-p-aminophenol, N,N-diisopropyl-p-phenylenediamine, and the like.

Examples of UV absorbers include 2-hydroxybenzophenone, 2,4-dihydroxybenzophenone, phenylsalicylate, 2,4-di-t-butylphenyl-3,5-di-t-butyl-4-hydroxybenzoate), 2'-hydroxyphenyl benzotriazole, (2'-hydroxy-5'-methylphenyl)benzotriazole, ethyl-2-cyano-3,3-diphenylacrylate, methyl-2-carbomethoxy-3-(paramethoxybenzyl)acrylate, and the like.

Examples of light stabilizers include 2,2,6,6-tetramethyl-4-piperidyl stearate, bis(2,2,6,6-tetramethyl-4-piperidyl)sebacate, tetrakis(2,2,6,6-tetramethyl-4-piperidyl)-1,2,3,4-butane tetracarboxylate, bis(2,2,6,6-tetramethyl-4-piperidyl)-di(tridecyl)-1,2,3,4-butane tetracarboxylate, bis(1,2,2,4,4-pentamethyl-4-piperidyl)-2-butyl-2-(3,5-di-t-butyl-4-hydroxybenzyl)malonate, 1-(2-hydroxyethyl)-2,2,6,6-tetramethyl-4-piperidinol-diethyl succinate polycondensation product, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8-12-tetraazadodecane, and the like.

Examples of flame retardants include tricresyl phosphate, tris(2,3-dibromopropyl)phosphate, decabromo biphenylether, tetrabromo bisphenol A, antimony trioxide, magnesium hydroxide, zinc borate, barium metaborate, aluminum hydroxide, red phosphorus, ammonium polyphosphate, HET acid, and the like.

Examples of antistatic agents include polyethylene oxide, polypropylene oxide, polyethylene glycol, polyester amide, polyether ester amide, and the like.

Examples of antimicrobial agents include 2-bromo-2-nitro-1,3-propanediol, 2,2-dibromo-2-nitroethanol, methylenebis thiocyanate, 1,4-bisbromoacetoxy-2-butene, hexabromodimethyl sulfone, 5-chloro-2,4,6-trifluoroisophthalonitrile, tetrachloroisophthalonitrile, dimethyldithiocarbamate, 4,5-dichloro-1,2-diol-3-one, 3,3,4,4-tetrachlorotetrahydrothiophene-1,1-dioxide, triiodoallyl alcohol, bromonitrostyrene, glutaraldehyde, phthalaldehyde, isophthalaldehyde, terephthalaldehyde, dichloroglyoxime, α-chlorobenzaldoxime, α-chlorobenzaldoxime acetate, 1,3-dichloro-5,5-dimethylhydantoin, 1,3-dibromo-5,5-dimethylhydantoin, and the like.

Examples of nucleating agents include 1,3:2,4-dibenzylidene sorbitol, sodium-2,2'-methylene-bis(4,6-di-t-butylphenyl)phosphate, bis(2,4,8,10-tetra-t-butyl-hydroxy-12H-dibenzo[d,g][1,3,2]dioxaphosphocin-6-oxide), aluminum benzoate, sodium adipate, sodium thiophenecarboxylate, sodium pyrrolecarboxylate, and the like.

Examples of lubricants include liquid paraffin, natural paraffin, micro wax, polyethylene wax, stearic acid, stearamide, palmitic acid amide, methylenebis stearyl amide, butyl stearate, hydrogenated castor oil, ethylene glycol monostearate, and the like.

Examples of anti-blocking agents include talc, silica, calcium carbonate, synthetic zeolite, starch, stearic acid bisamide, and the like.

Examples of colorants include inorganic pigments such as titanium oxide, lithopone, white lead, zinc oxide, aureolin, cobalt green, cerulean blue, cobalt blue, cobalt violet, iron oxide, iron blue, chromium oxide, lead chromate, barium chromate, cadmium sulfide, cadmium yellow, and ultramarine; azo pigments such as azo lake-based pigments, monoazo-based pigments, disazo-based pigments, or chelate azo-based pigments; organic pigments such as benzimidazolone-based pigments, phthalocyanine-based pigments, quinacridone-based pigments, dioxazine-based pigments, isoindolinone-based pigments, thioindigo-based pigments, perylene-based pigments, quinophthalone-based pigments, and anthraquinone-based polycyclic pigments; azo-based dyes, anthraquinone-based dyes, indigoid-based dyes, sulfide-based dyes, triphenylmethane-based dyes, pyrazolone-based dyes, stilbene-based dyes, diphenylmethane-based dyes, xanthene-based dyes, alizarin-based dyes, acridine-based dyes, quinoneimine-based dyes, thiazole-based dyes, methine-based dyes, nitro-based dyes, nitroso-based dyes, and aniline-based dyes.

Examples of fillers include inorganic fillers such as calcium carbonate, talc, clay, silicic acid, silicate, asbestos, mica, glass fiber, glass balloon, carbon fiber, metal fiber, ceramic whisker, and titanium whisker; and organic fillers such as urea, calcium stearate, organic cross-linked particles (for example, epoxy-based or urethane-based cross-linked particles), cellulose fiber, and wood flour.

Such other additives can be used singly, or in a combination of two or more.

When such other additives are added, the amount is such that the lower limit is preferably 0.01 parts by mass, and the upper limit is preferably 100 parts by mass; the lower limit is more preferably 0.5 parts by mass, and the upper limit is more preferably 50 parts by mass; and the lower limit is even more preferably 0.1 parts by mass, and the upper limit is even more preferably 10 parts by mass, per 100 parts by mass of the polyolefin-based resin composition.

### Polyolefin-Based Resin Film

The polyolefin-based resin film is obtained by forming the polyolefin-based resin composition described above into a film shape; in particular, it is a film formed by being stretched at least uniaxially.

Since the polyolefin-based resin film is formed by stretching the polyolefin-based composition at least uniaxially, the mechanical properties are maintained and the surface resistivity is significantly reduced, thereby enhancing antistatic performance. This can also reduce problems at the time of use, such as dust adherence.

The method for producing the polyolefin-based resin film is not particularly limited. The polyolefin-based resin film can be obtained, for example, by, after the polyolefin-based resin composition is produced, forming the polyolefin-based resin composition into a film shape by a T-die forming process, an inflation forming process, calendaring, solvent casting, a hot press method, or like methods, and stretching the film at least uniaxially.

The method for stretching the polyolefin-based resin film at least uniaxially is also not particularly limited. For example, a method of mono- or biaxially stretching the polyolefin-based resin film by roll stretching, tenter stretching, tubular stretching, or like methods can be used.

The polyolefin-based resin film may be stretched while being heated. By heating the film, the film can be evenly stretched at a high stretching magnification. The lower limit of the heating temperature is preferably equal to or higher than the glass transition temperature of the polyolefin-based resin, and more preferably at least 30°C higher than the glass transition temperature, even more preferably at least 50°C higher than the glass transition temperature. The upper limit of the heating temperature is preferably equal to or lower than the melting point of the polyolefin-based resin, more preferably at least 5°C lower than the melting point, and even more preferably at least 10°C lower than the melting point.

The direction in which the polyolefin-based resin film is stretched is not particularly limited, and the film may be stretched in any direction. For example, for the polyolefin-based resin film obtained by extrusion molding or injection molding, the resin film may be stretched in at least either the resin flow direction at the time of forming (MD direction), or the direction perpendicular thereto (TD direction).

The stretching magnification of the polyolefin-based resin film is not particularly limited. For example, the stretching magnification of the polyolefin-based resin film may be in the range of 1.01 to 20 The polyolefin-based resin composition can be easily formed into a film having no defects, and the polyolefin-based resin film obtained by stretching the composition has excellent antistatic performance. The lower limit of the stretching magnification can be suitably set as long as the effect of the present invention is not impaired. For example, the lower limit of the stretching magnification may be 1.1, 1.2, 1.3, 1.4, 1.5, 1.6, 1.7, 1.8, 1.9, or 2. The upper limit of the stretching magnification can be suitably set insofar as the effect of the present invention is not impaired. For example, the upper limit of the stretching magnification may be 10, 9, 8, 7, 6, or 5. From the viewpoint of enhancing the antistatic performance of the polyolefin-based resin film, the lower limit of the stretching magnification is more preferably 1.5 times, particularly preferably 2 times. From the same viewpoint, the upper limit of the stretching magnification is more preferably 10 times, and particularly preferably 5 times.

Further, when the polyolefin-based resin film has a resin flow direction (MD direction) and a direction perpendicular thereto (TD direction), the stretching magnification in the stretching in at least one of the MD direction and the TD direction is preferably in the range of 1.01 to 20 times from the viewpoint of forming a defect-free film and exhibiting sufficient antistatic performance. From the viewpoint of enhancing the antistatic performance of the polyolefin-based resin film, the lower limit of the stretching magnification in at least one of the MD direction and the TD direction is more preferably 1.5 times, and particularly preferably 2 times. From the same viewpoint, the upper limit of the uniaxial stretching magnification in at least one of the MD direction and the TD direction is more preferably 10 times, and particularly preferably 5 times.

The thickness of the polyolefin-based resin film is not particularly limited. For example, the thickness can be 0.01 to 10 mm. If the thickness is within this range, desirable formability can be maintained, and a polyolefin-based resin film with excellent antistatic performance can be more easily obtained. The thickness is more preferably 0.05 to 1 mm.

The polyolefin-based resin film thus stretched has a surface resistivity lower than that of unstretched polyolefin-based resin film. Although the surface resistivity value varies depending on the type of resin, the surface resistivity after stretching is preferably reduced to 1/10 to 1/10000, relative to the surface resistivity before stretching. More specifically, it is preferable that, for example, when the stretching magnification is 2 times, the surface resistivity after stretching is preferably reduced to 1/10 to 1/1000, relative to the surface resistivity before stretching. When the stretching magnification is 9 times, the surface resistivity after stretching is preferably reduced to 1/100 to 1/10000, relative to the surface resistivity before stretching. In such cases, the stretched polyolefin-based resin film has sufficient antistatic performance.

As a mechanism of enhancing the antistatic performance of the polyolefin-based resin film, the following is presumed. The domain of the metal salt-containing polyalkylene carbonate resin is linearly deformed by stretching and a conductive path is thereby formed. More specifically, in the polyolefin-based resin composition, the polyalkylene carbonate resin is dispersed in a polyolefin-based resin matrix. This dispersion state is confirmed to have a "sea-island structure." Because the polyolefin-based resin composition is in such a dispersion state, when the polyolefin-based resin film is formed without being stretched, a conductive path is difficult to form; accordingly, the surface resistance of the obtained polyolefin-based resin film hardly decreases. In contrast, when the polyolefin-based resin film is stretched, the configuration of the domain of the polyalkylene carbonate resin is stretched to allow easy contact with each other, thereby forming a conductive path mediated by a metal salt in the polyolefin-based resin film. As a result, the surface resistance of the polyolefin-based resin film decreases as compared with that before stretching, whereby the resulting film can exhibit better antistatic performance.

The polyolefin-based resin film may be used for various purposes, such as wrapping materials, masking materials, packaging materials for electronic components, tape materials, plastic bags, packaging materials for pharmaceuticals or sundries, plastic wraps for foods, transportation packaging materials, and the like. The polyolefin-based resin film may also be used as a lamination film obtained by bonding the film to paper, non-woven fabric, cellophane, or the like. Further, the polyolefin-based resin film may also be used as a label to be attached to other plastic resin shaped articles.

### Examples

The present invention is more specifically described below with reference to Production Examples, Examples, and Comparative Examples. However, the present invention is not limited to these Examples.

### Production Example 1: Production of Organozinc Catalyst

7.73 g (95 mmol) of zinc oxide, 12.3 g (100 mmol) of glutaric acid, 0.114 g (2 mmol) of acetic acid, and 76.0 g of toluene were placed in a 0.5-L four-necked flask equipped with a stirrer, a nitrogen gas inlet tube, a thermometer, a Dean-Stark tube, and a reflux condenser. Subsequently, while nitrogen is introduced into the reaction system at a flow rate of 50 mL/min, the temperature was raised to 55°C, and the mixture was stirred at the same temperature for 4 hours to allow a reaction to proceed. The temperature was then raised to 110°C, and the mixture was stirred at the same temperature for 2 hours and subjected to azeotropic dehydration to remove water. The reaction mixture was then cooled to room temperature to obtain a slurry containing an organozinc catalyst.

### Production Example 2: Production of Polypropylene Carbonate

After a 1-L autoclave equipped with a stirrer, a gas inlet tube, and a thermometer was purged with nitrogen to establish a nitrogen atmosphere in the system, 39.1 g of the slurry containing an organozinc catalyst (containing 45 mmol of an organozinc catalyst) obtained in Production Example 1, 192.4 g of dimethyl carbonate, and 26.1 g (450 mmol) of propylene oxide were placed in the autoclave. Subsequently, while stirring, carbon dioxide was added, and the reaction system was filled with carbon dioxide until the pressure in the reaction system had reached 1.0 MPa. The temperature was then raised to 60°C, and a polymerization reaction was performed for 10 hours while replenishing carbon dioxide consumed by the reaction. After completion of the reaction, the autoclave was cooled and depressurized. The reaction mixture was filtered and then dried under reduced pressure to obtain 40 g of polypropylene carbonate. The obtained polypropylene carbonate had a mass average molecular weight of 330,000 (Mw/Mn = 10.02).

The mass average molecular weight is a value calculated by preparing a 0.5% solution of polypropylene carbonate in N,N-dimethylformamide, conducting a measurement by high-performance liquid chromatography, and comparing the measurement result with that of polystyrene with known mass average molecular weight measured under the same conditions. The measurement conditions are as follows.

Column: GPC column (product name: Shodex OHpak SB-800 series, produced by Showa Denko K.K.)
Column Temperature: 40°C
Eluent: 0.03 mol/L lithium bromide-N,N-dimethylformamide solution
Flow rate: 0.65 mL/min

### Example 1

After 7.5 g of the polypropylene carbonate pellet obtained in Production Example 2 and 2.5 g of lithium bis(trifluoromethane sulfonyl)amide (hereinafter referred to as Li-TSFA, melting point: 235°C) were dissolved in 50 mL of acetone and uniformly mixed, the resulting mixture was dried at 25°C for 24 hours to obtain 10 g of a metal salt-containing polypropylene carbonate. 0.15 g of this metal salt-containing polypropylene carbonate pellet and 4.85 g of high-density polyethylene (produced by Toray Industries, Mw = 750,000, Mw/Mn = 6.3, Tg = -120°C, melting point = 134°C) were placed in a micro-compounder (manufactured by DSM Xplore), kneaded at 50 rpm and 160°C for 5 minutes, and allowed to stand at room temperature to obtain 5.0 g of a polyolefin-based resin composition. The obtained polyolefin-based resin composition was processed using a desktop hot press (manufactured by Techno Supply Co., Ltd.) at a press temperature of 210°C and a press pressure of 20 MPa to obtain a sheet-shaped article with a thickness of 0.2 mm.

The resulting sheet-shaped article was stretched in the MD direction using a "MODEL 4466" Instron tensile testing machine at 25°C and 120 mm/min to obtain three types of sheets having stretching magnifications of 1.5, 2, and 5 times. As a result, three polyolefin-based resin films having thicknesses of 0.18 mm (1.5 times), 0.15 mm (2 times), and 0.04 mm (5 times) were obtained.

### Example 2

A polyolefin-based resin composition was obtained in the same manner as in Example 1, except that the amount of the metal salt-containing polypropylene carbonate was changed to 0.75 g and the amount of the high-density polyethylene was changed to 4.25 g.

### Example 3

After 7.5 g of the polypropylene carbonate pellet obtained in Production Example 2 and 2.5 g of lithium bromide (hereinafter referred to as LiBr, melting point: 552°C) were dissolved in 50 mL of acetone and uniformly mixed, the resulting mixture was dried at 25°C for 24 hours to obtain 10 g of a metal salt-containing polypropylene carbonate. 0.75 g of the metal salt-containing polypropylene carbonate pellet and 4.75 g of high-density polyethylene (produced by Toray Industries, Inc., Mw = 750,000, Mw/Mn = 6.3, Tg = -120°C, melting point = 134°C) were supplied to a micro-compounder produced by DSM Xplore, kneaded at 160°C for 5 minutes, and allowed to stand at room temperature to obtain 5.0 g of a polyolefin-based resin composition. The obtained polyolefin-based resin composition was processed using a desktop hot press (manufactured by Techno Supply Co., Ltd.) at a press temperature of 210°C and a press pressure of 20 MPa to obtain a sheet-shaped article with a thickness of 0.2 mm.

The resulting sheet-shaped article was stretched in the MD direction using a "MODEL 4466" Instron tensile testing machine at 25°C and 120 mm/min to obtain three types of sheets having stretching magnifications of 1.5, 2, and 8 times. As a result, three polyolefin-based resin films having thicknesses of 0.18 mm (1.5 times), 0.15 mm (2 times), and 0.03 mm (8 times) were obtained.

### Example 4

A polyolefin-based resin composition was obtained in the same manner as in Example 1, except that the type of metal salt was changed to potassium iodide (hereinafter referred to as KI, melting point: 681°C).

### Comparative Example 1

A polyolefin-based resin composition and a polyolefin-based resin film were obtained by kneading polyethylene alone under the same conditions as in Example 1.

### Comparative Example 2

A polyolefin-based resin composition and a polyolefin-based resin film were obtained by kneading under the same conditions as in Example 1, except that no metal salt was used.

### Comparative Example 3

Kneading was performed under the same conditions as in Example 1, except that no polypropylene carbonate was used. As a result, the metal salt was immiscible, and a polyolefin-based resin composition was not obtained.

### Evaluation Method

### (1) Surface Resistivity

The surface resistivity was measured according to JIS K 6911: 1995 using the following measuring device.

Measuring Instrument: SM-8220 Super Insulation Tester, manufactured by Hioki E.E. Corporation
Measurement Temperature: 23°C
Measurement Humidity: 50% Rh
Measurement Conditions: The resistivity upon application of 500 V for 1 minute was defined as the measurement value.

**Table 1**

| | Salt | Surface retentivity Ω/□ | | |
|---|---|---|---|---|
| | | Stretching magnification | | |
| | | × 1 (control) | × 2 | × 9 |
| Example 1 | LiTFSA | 4.6×10¹⁶ | 1.1×10¹³ | 1.2×10¹² |
| Example 2 | LiTFSA | 8.1×10¹⁵ | 2.2×10¹⁴ | 4.2×10¹² |
| Example 3 | LiBr | 2.3×10¹⁵ | 3.3×10¹² | 3.1×10¹⁰ |
| Example 4 | KI | 4.5×10¹⁵ | 4.6×10¹³ | 4.0×10¹² |
| Comparative Example 1 | - | 7.2×10¹⁶ | 1.0×10¹⁶ | 5.1×10¹⁵ |
| Comparative Example 2 | - | 6.3×10¹⁶ | 5.0×10¹⁶ | 5.3×10¹⁵ |
| Comparative Example 3 | LiTFSA | - | - | - |

Table 1 shows the measurement results of surface resistivity of the polyolefin-based resin films having stretching magnifications of 1.5, 2, and 9 times, obtained in Examples 1 to 4 and Comparative Examples 1 and 2. As a control, Table 4 also shows the measurement results of the surface resistivity of an unstretched polyolefin-based resin film (magnification: x 1).

Fig. 1 shows the relationship between the stretching magnification and surface resistivity of the films obtained in Example 1 and Comparative Example 1.

The results of Table 1 show that the surface resistivity was significantly reduced by stretching in all of Examples 1 to 4. This clearly shows that stretching polyolefin-based resin films can enhance antistatic performance.

In contrast, the surface resistivity of a film consisting only of a polyolefin-based resin as in Comparative Example 1 hardly changed after stretching, as compared with that before stretching; and enhancement in antistatic performance by film stretching was not observed. Further, the results of Comparative Examples 2 and 3 show that enhancement in antistatic performance by film stretching was also not observed in films formed using a polyolefin-based resin composition not containing a polypropylene carbonate resin or a metal salt.

### Industrial Applicability

The polyolefin-based resin film of the present invention has excellent antistatic performance. Therefore, in addition to conventional uses of polyolefin-based resin films, the polyolefin-based resin film of the present invention can also be used, for example, as wrapping materials for electronic materials etc., in which polyolefin-based resin films had only limited use because of the necessary avoidance of electrostatic discharge or dust adherence.

## Claims

1. A polyolefin-based resin composition comprising a polyolefin-based resin, a polyalkylene carbonate resin, and a metal salt having a melting point higher than 100°C wherein the metal salt having a melting point higher than 100°C is formed from a metal cation and an anion and the cation is selected from the group consisting of lithium ion, sodium ion, and potassium ion, and the anion is selected from the group consisting of halogen, carboxylate, hexafluorophosphate, tetrafluoroborate, and bis(perfluoroalkyl sulfonyl)amide.

2. The polyolefin-based resin composition according to claim 1, wherein the polyalkylene carbonate resin is present in an amount of 0.05 to 20 parts by mass, and the metal salt having a melting point higher than 100°C is present in an amount of 0.01 to 5 parts by mass, per 100 parts by mass of the polyolefin-based resin.

3. The polyolefin-based resin composition according to claim 1 or 2, wherein the polyalkylene carbonate resin is a polypropylene carbonate.

4. The polyolefin-based resin composition according to any one of claims 1 to 3, wherein the polyolefin-based resin is polyethylene.

5. A polyolefin-based resin film formed using the polyolefin-based resin composition according to any one of claims 1 to 4, the film being stretched at least uniaxially.

6. The polyolefin-based resin film according to claim 5, wherein the uniaxial stretching magnification is in the range of 1.01 to 20.

## Patentansprüche

1. Eine Harzzusammensetzung auf Polyolefinbasis, umfassend ein Harz auf Polyolefinbasis, ein Polyalkylencarbonatharz und ein Metallsalz mit einem Schmelzpunkt von höher als 100°C, wobei das Metallsalz mit einem Schmelzpunkt von höher als 100°C aus einem Metallkation und einem Anion gebildet ist und das Kation ausgewählt ist aus der Gruppe bestehend aus Lithiumion, Natriumion und Kaliumion, und das Anion ausgewählt ist aus der Gruppe bestehend aus Halogen, Carboxylat, Hexafluorphosphat, Tetrafluorborat und Bis(perfluoralkylsulfonyl)amid.

2. Die Harzzusammensetzung auf Polyolefinbasis gemäß Anspruch 1, wobei das Polyalkylencarbonatharz in einer Menge von 0,05 bis 20 Massenteilen vorliegt und das Metallsalz mit einem Schmelzpunkt von höher als 100°C in einer Menge von 0,01 bis 5 Massenteilen vorliegt, bezogen auf 100 Massenteile des Harzes auf Polyolefinbasis.

3. Die Harzzusammensetzung auf Polyolefinbasis gemäß Anspruch 1 oder 2, wobei das Polyalkylencarbonatharz ein Polypropylencarbonat ist.

4. Die Harzzusammensetzung auf Polyolefinbasis gemäß einem der Ansprüche 1 bis 3, wobei das Harz auf Polyolefinbasis Polyethylen ist.

5. Ein Harzfilm auf Polyolefinbasis, gebildet unter Verwendung der Harzzusammensetzung auf Polyolefinbasis gemäß einem der Ansprüche 1 bis 4, wobei der Film mindestens uniaxial gestreckt ist.

6. Der Harzfilm auf Polyolefinbasis gemäß Anspruch 5, wobei die uniaxiale Streckvergrößerung im Bereich von 1,01 bis 20 liegt.

## Revendications

1. Composition de résine à base de polyoléfine comprenant une résine à base de polyoléfine, une résine de poly(carbonate d'alkylène), et un sel métallique ayant un point de fusion supérieur à 100°C, dans laquelle le sel métallique ayant un point de fusion supérieur à 100°C est formé à partir d'un cation métallique et d'un anion, et le cation est choisi dans le groupe constitué par l'ion lithium, l'ion sodium, et l'ion potassium, et l'anion est choisi dans le groupe constitué par un halogène, un carboxylate, un hexafluorophosphate, un tétrafluoroborate, et un bis(perfluoroalkylsulfonyl)amide.

2. Composition de résine à base de polyoléfine selon la revendication 1, dans laquelle la résine de poly(carbonate d'alkylène) est présente en une quantité de 0,05 à 20 parties en masse, et le sel métallique ayant un point de fusion supérieur à 100°C est présent en une quantité de 0,01 à 5 parties en masse, pour 100 parties en masse de la résine à base de polyoléfine.

3. Composition de résine à base de polyoléfine selon la revendication 1 ou 2, dans laquelle la résine de poly(carbonate d'alkylène) est un poly(carbonate de propylène).

4. Composition de résine à base de polyoléfine selon l'une quelconque des revendications 1 à 3, dans laquelle la résine à base de polyoléfine est le polyéthylène.

5. Film de résine à base de polyoléfine formé par utilisation de la composition de résine à base de polyoléfine selon l'une quelconque des revendications 1 à 4, le film étant étiré au moins uniaxialement.

6. Film de résine à base de polyoléfine selon la revendication 5, dans lequel l'agrandissement par étirage unixial est dans la gamme de 1,01 à 20.
